# EUROPEAN PATENT SPECIFICATION

(11) **EP 3 515 742 B1**
(45) Date of publication and mention of the grant of the patent: **14.10.2020**
(21) Application number: 17785011.2
(22) Date of filing: 21.09.2017
(51) Int. Cl.: B60K 23/04, B60K 23/08, B60K 17/34

(54) **VEHICLE FOR AGRICULTURAL USE WITH MEANS FOR ANALYSE THE VEHICLE STATE AND FOR COMMAND THE DIFFERENTIAL GROUP**
FAHRZEUG ZUR LANDWIRTSCHAFTLICHEN NUTZUNG MIT MITTEL ZUR ANALYSE DES FAHRZEUGZUSTANDES UND ZUR STEUERUNG DER DIFFERENTIALGRUPPE
VÉHICULE À USAGE AGRICOLE DOTÉ DE MOYENS D'ANALYSE DE L'ÉTAT DU VÉHICULE ET DE COMMANDE DU GROUPE DIFFÉRENTIEL

(30) Priority: 21.09.2016 IT 201600094657
(43) Date of publication of application: 31.07.2019
(73) Proprietor: Same Deutz-Fahr Italia S.p.A., 24047 Treviglio Bergamo (IT)
(72) Inventor: RIBALDONE, Massimo, 24047 Treviglio Bergamo (IT); TREMOLADA, Simone, 24047 Treviglio Bergamo (IT); DEGIORGI, Andrea, 24047 Treviglio Bergamo (IT); DOMINONI, Stefano, 24047 Treviglio Bergamo (IT)
(74) Representative: Gamba, Alessandro
(86) International application number: PCT/IB2017/055721
(87) International publication number: WO 2018/055540

(56) References cited:
- EP-A1- 1 704 078
- DE-U1-202013 003 847
- US-A1- 2016 227 698

## Description

The object of the present invention is a vehicle for agricultural use, preferably in the embodiment in which the vehicle for agricultural use is a "speciality tractor". Specifically, such a vehicle for agricultural use comprises a drive axle of the single-suspended-steering-wheel type and is adapted to control the drive of said wheel groups according to the motion conditions thereof. Moreover, the object of the present invention is a method of the traction of a vehicle for agricultural use having a drive axle of the single-suspended-steering-wheel type.

In the following description, the periphrasis "vehicle for agricultural use" means both agricultural tractors and more generally, earth-moving machines derived from agricultural tractors. "Tractor" usually refers to large vehicles generally specific to carry out power actions, "speciality tractors" refers to small vehicles, typically adapted to work between rows of vines or fruit trees.

The periphrasis "wheel group" means all types of wheels, without any limitations to the type of tire and wheel rim, single or twin type.

Moreover, in the present description, "drive axle with single-suspended-steering-wheel" refers to an axle adapted to support a right wheel group and a left wheel group independently of one another.

Vehicles for agricultural use are known in the prior art wich comprise drive axles of the single-suspended-steering-wheel type which however are afflicted by a particular drawback. In fact, in such vehicles pulling, the traction to the two wheel groups is transmitted using a differential group that evenly distributes it: in other words, when a wheel group is in I ow, or no, grip, the differential operates in such a way as to drive in traction the other wheel group at the same conditions, namely delivering low traction or even not delivering any traction, for example up to let the respective wheel group rotate idly.

In addition, in the prior art, a solution of vehicle that has faced said problem, is know; in particular in document DE202013003847U1. However, the vehicle there in disclosed is provided with a specific group of components mounted on each wheel group in such a way that each group of components commands the traction of the respective wheel group. In other words, the vehicle disclosed in said document is not suitable to solve the traction problem in a compact way.

The object of the present invention is to provide a vehicle for agricultural use and a method of managing the traction of a vehicle in which such a problem is overcome, maintaining a corrpact design of the vehicle.

Such an object is achieved by a vehicle implemented according to claim 1 and by a method of managing the traction according to claim 13. The dependent claims describe further preferred embodiments.

The features and the advantages of the vehicle for agricultural use according to the present invention will appear more clearly from the following description, made by way of an indicative and non-limiting example with reference to the accompanying figures, in which:
- figure 1 shows a perspective view of a vehicle for agricultural use object of the present invention according to a preferred embodiment, in which it is a speciality tractor;
- figure 2a shows a schematic view of an axle comprised in a vehicle for agricultural use of the single-suspended-steering-wheel type in a standard working condition in which both wheel groups work on the ground in adherence;
- figures 2b and 2b' show a schematic view of the drive axle of the single-suspended-steering-wheel type in which one of the two wheel groups is raised, respectively in a known embodiment and in an embodiment object of the present invention;
- figures 2c and 2c' show a schematic view of the drive axle of the single-suspended-steering-wheel type in which one of the two wheel groups is in a slipping condition, respectively in a known embodiment and in the embodiment object of the present invention;

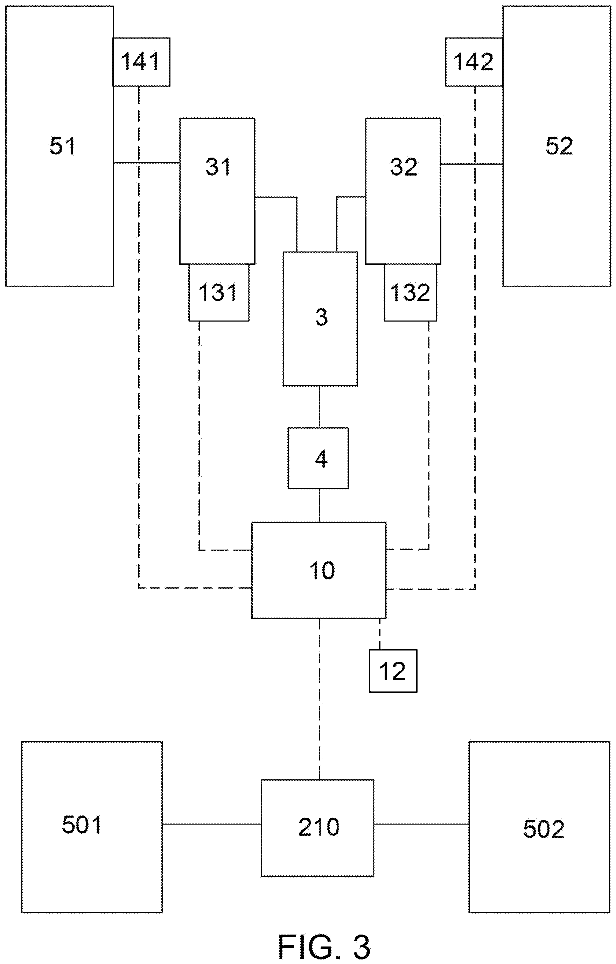

- figure 3 shows a diagram of the vehicle for agricultural use object of the present invention according to a preferred embodiment;
- figure 4 shows a block diagram showing the method of management of the traction of a vehicle according to the object of the present invention.

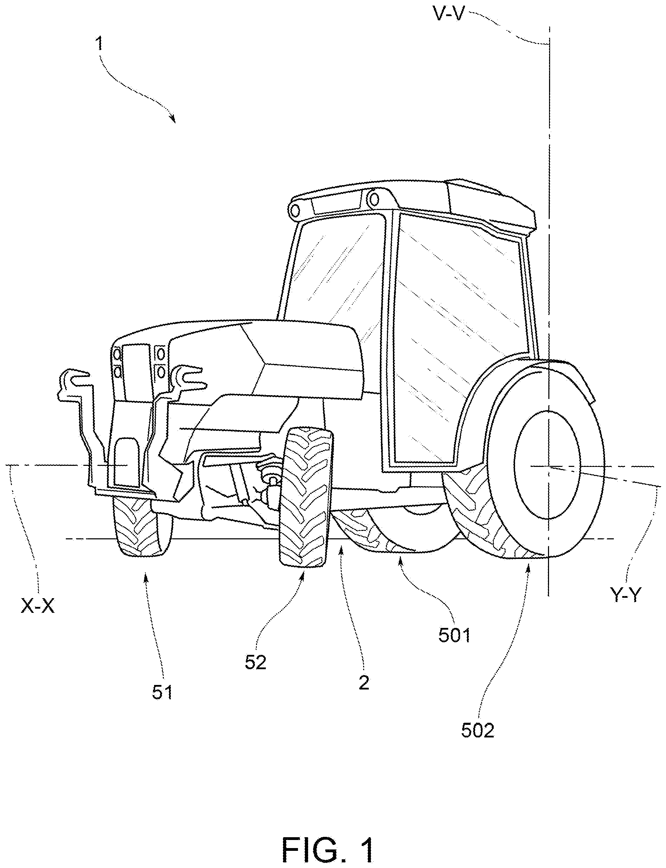

According to the accompanying figures, reference numeral 1 globally indicates a vehicle for agricultural use as a whole. In a preferred embodiment, like that shown in figure 1, the vehicle for agricultural use is a speciality tractor.

Vehicle 1 has a longitudinal axis X-X, along the feeding direction in a straight line, a transverse axis Y-Y, perpendicular to the longitudinal axis X-X, and a vertical axis V-V, perpendicular to the longitudinal axis X-X and to the transverse axis Y-Y.

Vehicle 1 comprises a plurality of axles that extend along the transverse axis Y-Y. Specifically, vehicle 1 comprises a drive axle 2 and a secondary drive axle 200 widely described hereinafter. Preferably, the drive axle 2 supports a right wheel group 51 and a left wheel group 52 while the secondary drive axle 200 supports a secondary right wheel group 501 and a secondary left wheel group.

According to a preferred embodiment, the drive axle 2 is of the single-suspended-steering-wheel type; i.e., it supports, respectively independently from each other the right wheel group 51 and the left wheel group 52.

Preferably, the drive axle 2 comprises respective wheel s support groups for support i ng the wheel groups 51, 52. Each wheel support group is supported in a darrpened manner to the chassis of vehicle 1 independently, by means of special dampening groups, for example comprising quadrilateral suspensions.

According to a preferred embodiment, vehicle 1 comprises a differential group 3 adapted to transmit and distribute the driving torque to the respective wheel groups 51, 52; preferably, the differential group 3 comprises a right shaft 31 and a left shaft 32 operatively connected with the right wheel group 51 and the left wheel group 52.

The differential group 3 is of the continuous variation type.

The differential group 3 comprises a multi-plate differential, for example pressurised in an oil bath.

In addition, vehicle 1 comprises detection means 10 adapted to detect specific states of vehicle 1.

Preferably, in fact, the detection means 10 comprise a vehicle speed detection group 12 adapted to detect the speed of motion of the vehicle.

In particular, the vehicle speed detection group 12 is also adapted to detect the speed variation of the vehicle, i.e., its acceleration or deceleration.

In a preferred embodiment, the vehicle speed detection group 12 is of the type comprising a phonic wheel keyed on the driving shaft of the vehicle and also a respective sensor adapted to detect the speed of rotation of the phonic wheel.

Preferably, moreover, the detection means 10 also comprise specific means adapted to detect and assess the motion conditions of the respective wheel groups 51, 52 of the drive axle 2.

In a preferred embodiment, the detection means 10 comprise a wheel axle speed detection group 13 comprising a right speed sensor 131 and a left speed sensor 132 respectively adapted to detect each rotation speed of the wheel groups 51, 52 induced by the right shaft 31 and by the left shaft 32. In particular, the right speed sensor 131 and likewise, the left speed sensor 132, are adapted to detect the rotation speed of the right shaft 31 and of the left shaft 32.

Preferably, the right speed sensor 131 and the left speed sensor 132 are each of the type comprising a respective phonic wheel integral to the respective right shaft 31 or left shaft 31 of the differential group 3, and also a respective sensor adapted to detect the rotating speed of the respective phonic wheel.

Moreover, the detection means 10 comprise a wheel axle direction detection unit 14 comprising a right steering sensor 141 and a left steering sensor 142 adapted to detect each steering angle, respectively, of the right wheel group 51 and the left wheel group 52.

Preferably, the right steering sensor 141 and the left steering sensor 142 are of the type comprising each a respective angular position sensor that measures the rotation of the respective wheel support group.

According to a preferred embodiment, vehicle 1 further comprises a main analysis and control unit 20 operatively connected to the detection means 10 and to the differential group 3.

The main analysis and control unit 20 is adapted to analyse what is detected by the detection means 10 to control the differential group 3 in a predefined traction operating configuration in which the drive torque is transmitted to the respective wheel groups 51, 52 and distributed between them as a function of the control of the main analysis and control unit 20.

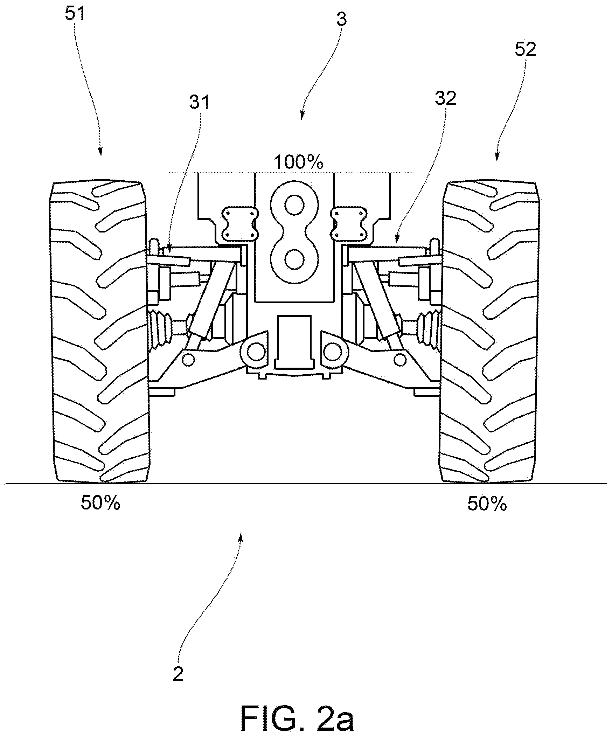

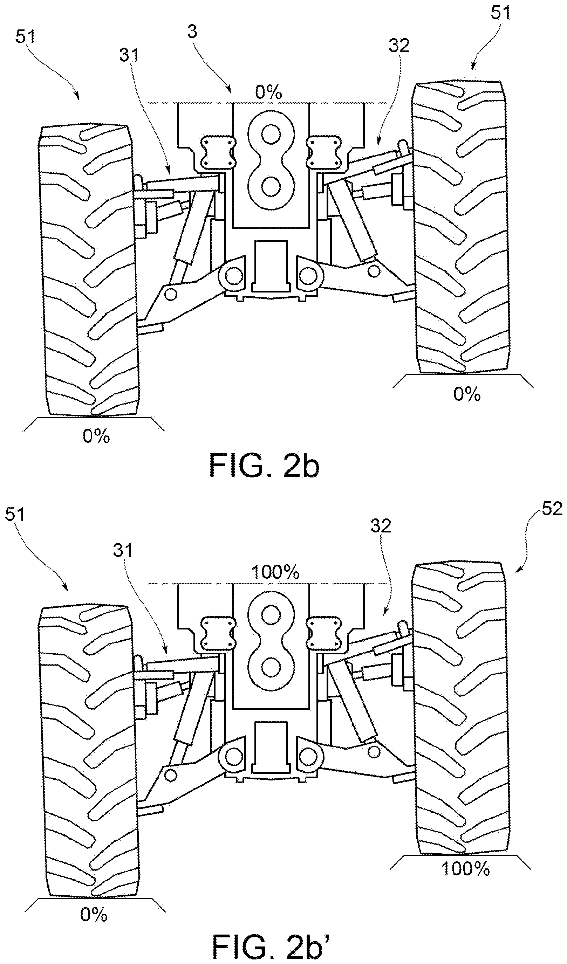

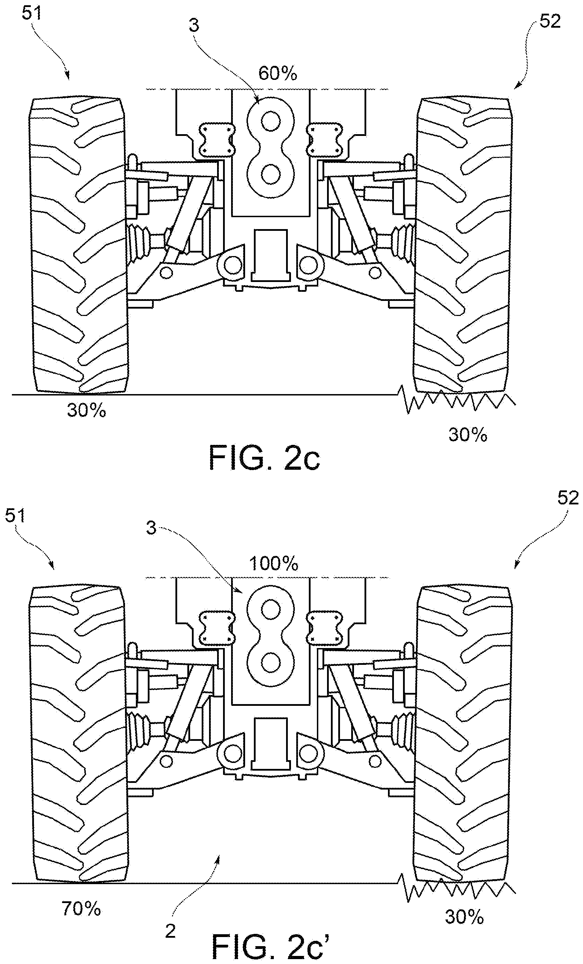

In other words, the analysis and control unit 20 is such as to operate with the differential group 3 to control it in specific traction operating configurations in which the driving torque is divided to the respective wheel groups. In other words, the analysis and control unit 20 is adapted to distribute the driving torque or a driving torque fraction to a wheel group in grip, even when the other wheel group 52 is in a lifting or slipping condition (such as schematised in figures 2b' and 2c').

In particular, in the embodiment with differential group 3 coimprising a multi-plate differential pressurised in an oil bath, the main analysis and control unit 20, as a function of what is detected by the detection means 10 controls the oil pressure inside the multi-plate differential to distribute the drive torque between the wheel groups 51, 52.

According to a preferred embodiment, the main analysis and control unit 20 is adapted to receive and compare the values detected respectively by the right speed sensor 131 and by the left speed sensor 132 with each other and/or with respect to a predetermined speed threshold value, for controlling the differential group 3 in a predefined operating configuration.

Moreover, according to a preferred embodiment, the main analysis and control unit 20 is adapted to receive and compare the values detected by the right steering sensor 141 and by the left steering sensor 142 with each other and/or with respect to a steering threshold value, for controlling the differential group 3 in a predefined operating configuration.

Preferably, the analysis and control unit 20 is adapted to receive and compare the values detected by both the wheel axle speed detection group 13 and by the wheel axle direction detection unit 14 for controlling the differential group 3 in a predetermined operating configuration.

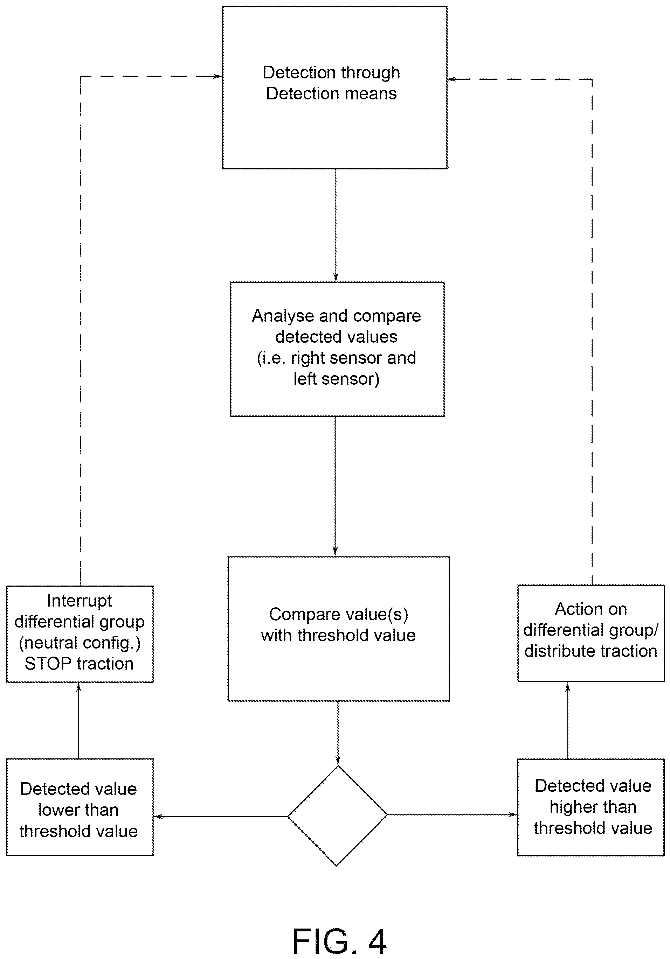

Preferably, the analysis and control unit 20 is adapted to receive data from the detection means and is adapted, using a specially configured software, to compare the values detected to recreate a mathematical value to be compared with a threshold value according with what is set in the mathematical model of the software; depending on whether the mathematical value is greater than or higher than the threshold value, the analysis and control unit 3 manages the configuration of the differential group 3 distributing the traction thereof (an operating example according to which the analysis and control unit operates is shown in the accompanying figure 4).

According to a preferred embodiment, the differential group 3 is commandable in a neutral configuration, in which traction to the wheel groups 51, 52 is interrupted. In other words, in the neutral configuration, the differential group 3 does not exchange driving torque on the respective wheel groups.

In a preferred embodiment of vehicle 1 for agricultural use, the above drive axle 2 is on the front axle of the vehicle.

According to the embodiment of vehicle 1 comprising the secondary drive axle 200, vehicle 1 further comprises secondary detection means 210 adapted to detect the state of motion of said secondary drive axle 200, such as the rotation speed of said further secondary wheel groups 501; 502 supported thereby.

Preferably, the main analysis and control unit 20 is operatively connected to the secondary detection means 210 and is adapted to analyse what is detected by the secondary detection means 210 for controlling the differential group 3 in a predefined traction operating configuration or in a null configuration. In other words, the main analysis and control unit 20 is configured to also manage the all-wheel drive of vehicle 1 according to what is detected by the specific detection means operating on the drive axle 2 and on the secondary drive axle 200.

The present invention also relates to a method of managing the traction of a vehicle for agricultural use 1 comprising a drive axle 2 of the single-suspended-steering-wheel type, supporting a right wheel group 51 and a left wheel group 52, respectively operatively connected with a differential group 3.

Such a method of managing the traction of a vehicle comprises the steps of:
- detecting, through detection means 10, the speed of motion of the vehicle and each rotation speed of the wheel groups 51, 52;
- analysing through a main analysis and control unit 20 what is detected by the detection means 10;
- commanding the differential group 3 in a predefined traction operating condition in which the drive torque is transmitted to the respective wheel groups 51, 52 and distributed between them as a function of the command of the main analysis and control unit 20.

Moreover, the method of managing the traction of a vehicle further comprises the step of:
- detecting, through the detection means 10, the steering direction of each wheel group 51, 52;
- analysing through a main analysis and control unit 20 what is detected by the detection means 10;
- commanding the differential group 3 in a predefined traction operating condition in which the drive torque is transmitted to the respective wheel groups 51, 52 and distributed between them as a function of the command of the main analysis and control unit 20.

Innovatively, the vehicle for agricultural use and the method of managing the traction of a vehicle for agricultural use object of the present invention allow the achievement of the above object of the invention, i.e. to improve the traction of the vehicle also on drive axles of the single-suspended-steering-wheel type.

Advantageously, the vehicle is adapted to independently manage the modes of its traction without requiring the intervention of the pilot. Specifically, the vehicle is adapted to independently manage the traction of a drive axle of the single-suspended-steering-wheel type, in particular between the two respective wheel groups. In particular, the vehicle is adapted to manage the traction of a respective wheel group with respect to the conditions of the other wheel group belonging to the same axle. Advantageously, the vehicle is adapted to distribute the traction action or a fraction of the traction action to the wheel group in grip on the ground, when the other wheel group is in a lifted or slipping condition. Advantageously, the vehicle is adapted to cope with difficult situations with an excellent traction, such as turns placed on particular differences in height, such as those that exist between two lines of trees or a vineyard.

According to a further advantageous aspect, the vehicle is adapted to independently manage the traction between one axle and the other.

According to yet a further advantageous aspect, the vehicle is adapted to manage the traction in such a way as to prevent the pilot from having to make decisions or activate specific traction management devices.

Advantageously, the vehicle also manages the traction in complex situations, for example considering both the speed and the steering of each wheel group.

Advantageously, the vehicle has an improved steering capacity in slippery conditions.

Moreover, advantageously, the vehicle has an exceptional manoeuvrability in tight and steep spaces.

In yet a further advantageous aspect, the vehicle has an improved driveability on the road while avoiding any understeer conditions.

It is clear that a man skilled in the art may make changes to the vehicle and to the production method in order to meet incidental needs, all falling within the scope of protection defined in the following claims.

## Claims

1. Vehicle for agricultural use (1) comprising:
- a drive axle (2) of the single-suspended-steering-wheel type adapted to support, respectively independently from each other a right wheel group (51) and a left wheel group (52);
- a differential group (3) of the continuous variation type comprising a multi-plate differential, pressurised in an oil bath wherein the differential group (3) is operatively connected with the right wheel group (51) and the left wheel group (52) by means of a right shaft (31) and a left shaft (32) and is adapted to transmit and distribute the drive torque to the respective wheel groups (51; 52);
- detection means (10) comprising:
i) a vehicle speed detection group (12) adapted to detect the speed of motion of the vehicle;
ii) a wheel axle speed detection group (13) comprising a right speed sensor (131) and a left speed sensor (132) respectively adapted to detect each rotation speed of the wheel groups induced by the right shaft (31) and by the left shaft (32);
- a main analysis and control unit (20) operatively connected to the detection means (10) and to the differential group (3), adapted to analyse what is detected by the detection means (10), and as a function of what is detected by the detection means (10), adapted to control the differential group (3) in a predefined traction operating configuration controlling the oil pressure inside the multi-plate differential to distribute the drive torque between the wheel groups (51; 52), so that the drive torque is transmitted to the respective wheel groups (51; 52) and distributed between them as a function of the control of the main analysis and control unit (20).

2. Vehicle for agricultural use (1) according to claim 1, wherein the main analysis and control unit (20) is adapted to receive and compare the values detected respectively by the right speed sensor (131) and by the left speed sensor (132) with each other and/or with respect to a predetermined speed threshold value, for controlling the differential group (3) in a predefined operating configuration.

3. Vehicle for agricultural use (1) according to claim 1, wherein the detection means (10) also comprise a wheel axle direction detection unit (14) comprising a right steering sensor (141) and a left steering sensor (142) adapted to detect each steering angle, respectively, of the right wheel group (51) and the left wheel group (52).

4. Vehicle for agricultural use (1) according to claim 3, wherein the main analysis and control unit (20) is adapted to receive and compare the values detected by the right steering sensor (141) and by the left steering sensor (142) with each other and/or with respect to a predetermined steering threshold value, for controlling the differential group (3) in a predefined operating configuration.

5. Vehicle for agricultural use (1) according to any of the preceding claims, wherein the vehicle speed detection group (12) is also adapted to detect the speed variation of the vehicle, i.e., its acceleration or deceleration.

6. Vehicle for agricultural use (1) according to any of the preceding claims, wherein the differential group (3) is commandable in a neutral configuration, in which traction to the wheel groups (51; 52) is interrupted.

7. Vehicle for agricultural use (1) according to any of the preceding claims, wherein said drive axle (2) is the front axle of the vehicle.

8. Vehicle for agricultural use (1) according to any of the preceding claims, further comprising:
- at least one secondary drive axle (200) for the support of additional secondary wheel groups (501; 502);
- secondary detection means (210) adapted to detect the state of motion of said secondary drive axle (200), for example the rotation speed of said additional secondary wheel groups (501; 502);
wherein the main analysis and control unit (20) is operatively connected to the secondary detection means (210) and is adapted to analyse what is detected by the secondary detection means (210) for controlling the differential group (3) in a predefined traction operating configuration or in a null configuration.

9. Vehicle for agricultural use (1) according to any of the preceding claims, wherein said vehicle for agricultural use (1) is a speciality tractor.

10. Method of managing the traction of a vehicle for agricultural use (1) comprising a drive axle (2) of the single-suspended-steering-wheel type, supporting a right wheel group (51) and a left wheel group (52), respectively operatively connected with a differential group (3) of the continuous variation type comprising a multi-plate differential, pressurised in an oil bath, the method comprising the steps of:
- detecting, through detection means (10), the speed of motion of the vehicle and each rotation speed of the wheel groups (51; 52);
- analysing through a main analysis and control unit (20) what is detected by the detection means (10);
the method being **characterized by** the fact that comprises also the step of:
- commanding the differential group (3) in a predefined traction operating condition controlling the oil pressure inside the multi-plate differential to distribute the drive torque between the wheel groups (51; 52) so that the drive torque is transmitted to the respective wheel groups (51; 52) and distributed between them as a function of the command of the main analysis and control unit (20).

11. Method of managing traction according to claim 10, further comprising the step of:
- detecting, through the detection means (10), the steering direction of each wheel group (51; 52);
- analysing through a main analysis and control unit (20) what is detected by the detection means (10);
- commanding the differential group (3) in a predefined traction operating condition in which the drive torque is transmitted to the respective wheel groups (51; 52) and distributed between them as a function of the command of the main analysis and control unit (20).

## Patentansprüche

1. Fahrzeug für eine landwirtschaftliche Verwendung (1), umfassend:
- eine Antriebsachse (2) des Einzelradaufhängung-Typs, welche dazu eingerichtet ist, jeweils unabhängig voneinander eine rechte Radgruppe (51) und eine linke Radgruppe (52) zu haltern;
- eine Differenzial-Gruppe (3) des kontinuierlichen Variation-Typs, umfassend ein Multi-Platten-Differenzial, welches in einem Ölbad unter Druck versetzt ist, wobei die Differenzial-Gruppe (3) mit der rechten Radgruppe (51) und der linken Radgruppe (52) mittels einer rechten Welle (31) und einer linken Welle (32) betriebsmäßig verbunden ist und dazu eingerichtet ist, das Antriebsmoment an die entsprechenden Radgruppen (51; 52) zu übertragen und zu verteilen;
- Detektion-Mittel (10), umfassend:
i) eine Fahrzeuggeschwindigkeit-Detektion-Gruppe (12), welche dazu eingerichtet ist, die Geschwindigkeit einer Bewegung des Fahrzeugs zu detektieren;
ii) eine Rad-Achs-Geschwindigkeit-Detektion-Gruppe (13), umfassend einen rechten Geschwindigkeitssensor (131) und einen linken Geschwindigkeitssensor (132), welche jeweils dazu eingerichtet sind, jede Rotationsgeschwindigkeit der Radgruppen zu detektieren, welche durch die rechte Welle (31) und durch die linke Welle (32) induziert wird;
- eine Haupt-Analyse- und Steuer-Einheit (20), welche mit den Detektion-Mitteln (10) und mit der Differenzial-Gruppe (3) betriebsmäßig verbunden ist, welche dazu eingerichtet ist, zu analysieren, was durch die Detektion-Mittel (10) detektiert wird, und als eine Funktion dessen, was durch die Detektion-Mittel (10) detektiert wird, dazu eingerichtet, die Differenzial-Gruppe (3) in einer vorab definierten Traktion-Betrieb-Konfiguration zu steuern, wobei der Öldruck innerhalb des Multi-Platten-Differenzials gesteuert wird, um das Antriebsmoment zwischen den Radgruppen (51; 52) zu verteilen, so dass das Antriebsmoment an die entsprechenden Radgruppen (51; 52) übertragen und zwischen diesen als eine Funktion der Steuerung der Haupt-Analyse- und Steuer-Einheit (20) verteilt wird.

2. Fahrzeug für eine landwirtschaftliche Verwendung (1) nach Anspruch 1, wobei die Haupt-Analyse- und Steuer-Einheit (20) dazu eingerichtet ist, die Werte, welche jeweils durch den rechten Geschwindigkeitssensor (131) und durch den linken Geschwindigkeitssensor (132) detektiert werden, miteinander und/oder in Bezug auf einen vorbestimmten Geschwindigkeit-Schwellenwert zu empfangen und zu vergleichen, um die Differenzial-Gruppe (3) in einer vorab definierten Betrieb-Konfiguration zu steuern.

3. Fahrzeug für eine landwirtschaftliche Verwendung (1) nach Anspruch 1, wobei die Detektion-Mittel (10) auch eine Rad-Achs-Richtung-Detektion-Einheit (14) umfassen, welche einen rechten Lenk-Sensor (141) und einen linken Lenk-Sensor (142) umfasst, welche dazu eingerichtet sind, jeden Lenkwinkel der rechten Radgruppe (51) bzw. der linken Radgruppe (52) zu detektieren.

4. Fahrzeug für eine landwirtschaftliche Verwendung (1) nach Anspruch 3, wobei die Haupt-Analyse- und Steuer-Einheit (20) dazu eingerichtet ist, die Werte, welche durch den rechten Lenk-Sensor (141) und durch den linken Lenk-Sensor (142) detektiert werden, miteinander und/oder in Bezug auf einen vorbestimmten Lenk-Schwellenwert zu empfangen und zu vergleichen, um die Differenzial-Gruppe (3) in einer vorab definierten Betriebs-Konfiguration zu steuern.

5. Fahrzeug für eine landwirtschaftliche Verwendung (1) nach einem der vorhergehenden Ansprüche, wobei die Fahrzeug-Geschwindigkeit-Detektion-Gruppe (12) auch dazu eingerichtet ist, die Geschwindigkeit-Variation des Fahrzeugs zu detektieren, das heißt seine Beschleunigung oder Verzögerung.

6. Fahrzeug für eine landwirtschaftliche Verwendung (1) nach einem der vorhergehenden Ansprüche, wobei die Differenzial-Gruppe (3) in einer neutralen Konfiguration befehlbar ist, in welcher eine Traktion der RadGruppen (51; 52) unterbrochen ist.

7. Fahrzeug für eine landwirtschaftliche Verwendung (1) nach einem der vorhergehenden Ansprüche, wobei die Antriebsachse (2) die vordere Achse des Fahrzeugs ist.

8. Fahrzeug für eine landwirtschaftliche Verwendung (1) nach einem der vorhergehenden Ansprüche, ferner umfassend:
- wenigstens eine sekundäre Antriebsachse (200) für die Halterung von zusätzlichen sekundären Radgruppen (501; 502);
- sekundäre Detektion-Mittel (210), welche dazu eingerichtet sind, den Zustand einer Bewegung der sekundären Antriebsachse (200) zu detektieren, zum Beispiel die Rotationsgeschwindigkeit der zusätzlichen sekundären Radgruppen (501; 502);
wobei die Haupt-Analyse- und Steuer-Einheit (20) mit den sekundären Detektion-Mitteln (210) betriebsmäßig verbunden ist und dazu eingerichtet ist, zu analysieren, was durch die sekundären Detektion-Mittel (210) detektiert wird, um die Differenzial-Gruppe (3) in einer vorab definierten Traktion-Betrieb-Konfiguration oder in einer Null-Konfiguration zu steuern.

9. Fahrzeug für eine landwirtschaftliche Verwendung (1) nach einem der vorhergehenden Ansprüche, wobei das Fahrzeug für eine landwirtschaftliche Verwendung (1) ein Spezial-Traktor ist.

10. Verfahren eines Verwaltens der Traktion eines Fahrzeugs für eine landwirtschaftliche Verwendung (1), umfassend eine Antriebsachse (2) des Einzelradaufhängung-Typs, welche eine rechte Radgruppe (51) und eine linke Radgruppe (52) haltert, welche mit einer Differenzial-Gruppe (3) des kontinuierlichen Variation-Typs betriebsmäßig verbunden sind, umfassend ein Multi-Platten-Differenzial, welches in einem Ölbad unter Druck versetzt ist, wobei das Verfahren die Schritte umfasst:
- Detektieren durch Detektion-Mittel (10) der Geschwindigkeit einer Bewegung des Fahrzeugs und jeder Rotationsgeschwindigkeit der Radgruppen (51; 52);
- Analysieren durch eine Haupt-Analyse- und Steuer-Einheit (20), was durch die Detektion-Mittel (10) detektiert wird;
wobei das Verfahren durch die Tatsache gekennzeichnet ist, dass es auch die Schritte umfasst:
- Befehlen der Differenzial-Gruppe (3) in einer vorab definierten Traktion-Betrieb-Bedingung, wobei der Öldruck innerhalb des Multi-Platten-Differenzials gesteuert wird, um das Antriebsmoment zwischen den Radgruppen (51; 52) zu verteilen, so dass das Antriebsmoment an die entsprechenden Radgruppen (51; 52) übertragen und zwischen diesen als eine Funktion des Befehls der Haupt-Analyse- und Steuer-Einheit (20) verteilt wird.

11. Verfahren eines Verwaltens von Traktion nach Anspruch 10, ferner umfassend den Schritt:
- Detektieren durch die Detektion-Mittel (10) der Lenk-Richtung jeder Radgruppe (51; 52);
- Analysieren durch eine Haupt-Analyse- und Steuer-Einheit (20), was durch die Detektion-Mittel (10) detektiert wird;
- Befehlen der Differenzial-Gruppe (3) in einer vorab definierten Traktion-Betrieb-Bedingung, in welcher das Antriebsmoment an die entsprechenden Radgruppen (51; 52) übertragen und zwischen diesen als eine Funktion des Befehls der Haupt-Analyse- und Steuer-Einheit (20) verteilt wird.

## Revendications

1. Véhicule à usage agricole (1) comprenant :
- un essieu d'entraînement (2) du type à roue de direction suspendue unique conçu pour supporter, respectivement indépendamment l'un de l'autre un ensemble de roue droit (51) et un ensemble de roue gauche (52) ;
- un groupe différentiel (3) du type à variation continue comprenant un différentiel à disques multiples, mis sous pression dans un bain d'huile dans lequel le groupe différentiel (3) est fonctionnellement relié à l'ensemble de roue droit (51) et à l'ensemble de roue gauche (52) au moyen d'un arbre droit (31) et d'un arbre gauche (32) et est conçu pour transmettre et distribuer le couple d'entraînement aux ensembles de roue respectifs (51 ; 52) ;
- un moyen de détection (10) comprenant :
i) un ensemble de détection de vitesse de véhicule (12) conçu pour détecter la vitesse de mouvement du véhicule ;
ii) un ensemble de détection de vitesse d'essieu de roue (13) comprenant un capteur de vitesse droit (131) et un capteur de vitesse gauche (132) respectivement conçus pour détecter chaque vitesse de rotation des ensembles de roue induite par l'arbre droit (31) et par l'arbre gauche (32) ;
- une unité principale d'analyse et de commande (20) fonctionnellement reliée au moyen de détection (10) et au groupe différentiel (3), conçue pour analyser les éléments détectés par le moyen de détection (10), et en fonction des éléments détectés par le moyen de détection (10), conçue pour commander le groupe différentiel (3) dans une configuration de fonctionnement de traction prédéfinie commandant la pression d'huile à l'intérieur du différentiel à disques multiples pour distribuer le couple d'entraînement entre les ensembles de roue (51 ; 52), de sorte que le couple d'entraînement est transmis aux ensembles de roue respectifs (51 ; 52) et distribué entre eux en fonction de la commande de l'unité principale d'analyse et de commande (20).

2. Véhicule à usage agricole (1) selon la revendication 1, dans lequel l'unité principale d'analyse et de commande (20) est conçue pour recevoir et comparer les valeurs détectées respectivement par le capteur de vitesse droit (131) et par le capteur de vitesse gauche (132) l'un avec l'autre et/ou par rapport à une valeur seuil de vitesse prédéterminée, pour commander le groupe différentiel (3) dans une configuration de fonctionnement prédéfinie.

3. Véhicule à usage agricole (1) selon la revendication 1, dans lequel le moyen de détection (10) comprend également une unité de détection de direction d'essieu de roue (14) comprenant un capteur de direction droit (141) et un capteur de direction gauche (142) conçus pour détecter chaque angle de direction, respectivement, de l'ensemble de roue droit (51) et de l'ensemble de roue gauche (52).

4. Véhicule à usage agricole (1) selon la revendication 3, dans lequel l'unité principale d'analyse et de commande (20) est conçue pour recevoir et comparer les valeurs détectées par le capteur de direction droit (141) et par le capteur de direction gauche (142) l'un avec l'autre et/ou par rapport à une valeur seuil de direction prédéterminée, pour commander le groupe différentiel (3) dans une configuration de fonctionnement prédéfinie.

5. Véhicule à usage agricole (1) selon l'une quelconque des revendications précédentes, dans lequel l'ensemble de détection de vitesse de véhicule (12) est également conçu pour détecter la variation de vitesse du véhicule, à savoir, son accélération ou sa décélération.

6. Véhicule à usage agricole (1) selon l'une quelconque des revendications précédentes, dans lequel le groupe différentiel (3) peut être commandé dans une configuration neutre, dans laquelle une traction des ensembles de roue (51 ; 52) est interrompue.

7. Véhicule à usage agricole (1) selon l'une quelconque des revendications précédentes, dans lequel ledit essieu d'entraînement (2) est l'essieu avant du véhicule.

8. Véhicule à usage agricole (1) selon l'une quelconque des revendications précédentes, comprenant en outre :
- au moins un essieu d'entraînement secondaire (200) pour le support d'ensembles de roue secondaires supplémentaires (501 ; 502) ;
- un moyen de détection secondaire (210) conçu pour détecter l'état de mouvement dudit essieu d'entraînement secondaire (200), par exemple la vitesse de rotation desdits ensembles de roue secondaires supplémentaires (501 ; 502) ;
dans lequel l'unité principale d'analyse et de commande (20) est fonctionnellement reliée au moyen de détection secondaire (210) et est conçue pour analyser les éléments détectés par le moyen de détection secondaire (210) pour commander le groupe différentiel (3) dans une configuration de fonctionnement de traction prédéfinie ou dans une configuration nulle.

9. Véhicule à usage agricole (1) selon l'une quelconque des revendications précédentes, dans lequel ledit véhicule à usage agricole (1) est un tracteur spécialisé.

10. Procédé de gestion de la traction d'un véhicule à usage agricole (1) comprenant un essieu d'entraînement (2) du type à roue de direction suspendue unique, supportant un ensemble de roue droit (51) et un ensemble de roue gauche (52), respectivement fonctionnellement reliés à un groupe différentiel (3) du type à variation continue comprenant un différentiel à disques multiples, mis sous pression dans un bain d'huile, le procédé comprenant les étapes de :
- détection, par le biais d'un moyen de détection (10), de la vitesse de mouvement du véhicule et de chaque vitesse de rotation des ensembles de roue (51 ; 52) ;
- analyse par le biais d'une unité principale d'analyse et de commande (20) des éléments détectés par le moyen de détection (10) ;
le procédé étant **caractérisé en ce qu'**il comprend également l'étape de :
commande du groupe différentiel (3) dans une condition de fonctionnement de traction prédéfinie commandant la pression d'huile à l'intérieur du différentiel à disques multiples pour distribuer le couple d'entraînement entre les ensembles de roue (51 ; 52) de sorte que le couple d'entraînement est transmis aux ensembles de roue respectifs (51 ; 52) et distribué entre elles en fonction de la commande de l'unité principale d'analyse et de commande (20).

11. Procédé de gestion de traction selon la revendication 10, comprenant en outre l'étape de :
- détection, par le biais du moyen de détection (10), de la direction de direction de chaque ensemble de roue (51 ; 52) ;
- analyse par le biais d'une unité principale d'analyse et de commande (20) des éléments détectés par le moyen de détection (10) ;
- commande du groupe différentiel (3) dans une condition de fonctionnement de traction prédéfinie dans laquelle le couple d'entraînement est transmis aux ensembles de roue respectifs (51 ; 52) et distribué entre eux en fonction de la commande de l'unité principale d'analyse et de commande (20).
